# EUROPEAN PATENT APPLICATION

(11) **EP 4 477 533 A1**
(43) Date of publication of application: **18.12.2024**
(21) Application number: 24180614.0
(22) Date of filing: 06.06.2024
(51) Int. Cl.: B64C 9/12, B64C 9/32, B64C 21/08, B64C 23/06

(54) **A CONTROL DEVICE FOR AN AIRCRAFT**

(30) Priority: 15.06.2023 GB 202308967
(71) Applicant: Airbus Operations Limited, Bristol BS34 7PA (GB)
(72) Inventor: KIRK, James Graham, Bristol, BS34 7PA (GB)
(74) Representative: Abel & Imray LLP

(57) **Abstract**

In an aircraft wing structure where space and weight considerations are a principal concern, there may be significant challenges in providing a moveable slat and/or a spoiler, particularly in combination with one another. A control device (102) for an aircraft is provided comprising upper (120) and lower (122) flaps pivotably mountable adjacent to a slot (106) in a wing (100) behind a leading edge; wherein the control device (102) is operable in a lift configuration to move the upper (120) and lower (122) flaps towards each other to abut opposing surfaces of the slot (106), to permit airflow along the slot (106).

## Description

### BACKGROUND OF THE INVENTION

The present disclosure relates to a control device for an aircraft, and a method of controlling lift exerted by a wing.

Various control devices are known for varying the lift and load characteristics of a wing. The leading edge of a wing may be provided with a slat, which is moveable forward from the leading edge to create an airflow slot behind the slat, thereby increasing the coefficient of lift of the wing and consequently increasing stall angle of attack. Moveable slats may require relatively complex track mechanisms, requiring substantial space in the leading edge of the wing. Another form of control device is a popup spoiler, which extends upwards from the wing to spoil airflow above the wing, thereby alleviating load on the wing.

In an aircraft wing structure where space and weight considerations are a principal concern, there may be significant challenges in providing a moveable slat and/or a spoiler, particularly in combination with one another.

US2018099737A1 discloses a control device for an aircraft comprising upper and lower spoilers, which are movable away from each other out of a wing. In a high lift enabled position, the spoilers form a second leading edge of the wing.

GB2578472A discloses a moveable wing tip device comprising an airflow channel extending between respective apertures on the upper and lower surfaces of the wing tip device. The channel is configurable between an open state in which air can flow through the channel and a closed state in which the airflow through the channel is blocked.

The present invention seeks to mitigate one or more of the above-mentioned problems. Alternatively or additionally, the present invention seeks to provide an improved control device for an aircraft.

### SUMMARY OF THE INVENTION

The present invention provides, according to a first aspect, a control device for an aircraft, the control device comprising upper and lower flaps, which are (preferably pivotably) mountable adjacent to a slot in a wing behind a leading edge. In use, the upper flap is located at an upper surface of the wing (e.g. on the top of the wing) and the lower flap is located at a lower surface of the wing (e.g. on the underside of the wing). The control device is operable in a lift configuration (e.g. a high lift configuration) to move the upper and lower flaps to permit airflow along the slot, for example by moving them towards each other to abut opposing surfaces of the slot.

In this way, in the lift configuration a passage for airflow may be formed by a combination of the upper and lower flaps with the slot. Accordingly, the size of the flaps may be kept to a minimum, thereby minimising the force required to move the flaps. This may in turn reduce the size of an actuator or motor for moving the flaps. The combination of the slot and the upper and lower flaps may provide a compact and low-complexity control device. The permission of airflow along the slot may be especially beneficial for changing the aerodynamic forces on the wing. Fluid communication between a lower and upper surface of the wing along the slot may increase the lift coefficient of the wing, and increase the wing stall angle of attack. Such a configuration may be particularly beneficial for handling quality of the aircraft, and for improved performance at lower speeds.

Such a control device may be especially beneficial for high span aircraft, where wing tip stall is particularly dangerous, and space and weight considerations in the wing tip are of importance. This may also be beneficial for known aircraft with moveable wing tip devices attached to fixed wings, such as the example disclosed in WO2017118832. By providing a control device according to a first aspect of the invention, the movement of the wing tip into a flight configuration may be assisted by operating the control device in the lift configuration.

The slot when open such that airflow is permitted along the slot may have an open lower aperture on a lower surface of the wing and an open upper aperture on an upper surface of the wing. The upper flap is preferably arranged for movement to and from a closed position in which it restricts (preferably prevents) airflow via the upper aperture. Preferably the upper flap sealing closes the upper aperture. The lower flap is preferably arranged for movement to and from a closed position in which it restricts (preferably prevents) airflow via the lower aperture. Preferably the lower flap sealing closes the lower aperture. It may be that when closed, the upper flap is aligned with the immediately surrounding external surface of the wing, preferably such that the external surface of the flap provides a smooth continuation of the shape of the surrounding wing surface. It may be that when closed, the lower flap is aligned with the immediately surrounding external surface of the wing, preferably such that the external surface of the flap provides a smooth continuation of the shape of the surrounding wing surface.

In the lift configuration, the upper flap may be moved less than the lower flap, such that the upper aperture on the upper surface of the wing is smaller than the lower aperture on the lower surface of the wing. In this way, airflow may be accelerated through the slot to further increase lift.

There may be an actuator which is provided for moving each of the upper flap and the lower flap. It may be that the same single actuator is configured for moving the upper flap and the lower flap in each case.

The upper flap may be mountable adjacent to an upper surface of the wing. The lower flap may be mountable adjacent to a lower surface of the wing. Pivotably mountable may be defined as a mechanical connection permitting the upper and lower flaps to pivot relative to the wing. The upper flap may pivot about an upper pivot point, and the lower flap may pivot about a lower pivot point. The upper and lower flaps may pivot about axes oriented substantially perpendicular to oncoming airflow and/or a chord line of the wing. The pivot points may comprise a hinge, for example a piano hinge. The pivotable mounts may be substantially free to rotate, or may comprise resisting means to resist and/or dampen rotational movement of the upper and lower flaps.

The leading edge of the wing may be the front of the wing, that is, the first part of the wing to encounter oncoming airflow in flight. The slot may comprise a channel extending from a lower aperture on a lower surface of the wing to an upper aperture on an upper surface of the wing. The channel may be fixed in position relative to the wing (e.g. the main body of the wing) and may have the same overall shape and size along at least the majority of (possibly at least 80% of) its length from the lower aperture to the upper aperture when the channel is open and air is flowing therethrough and when the channel is closed by the flaps. For example it may be that the shape and size of the air-flow channel is the same as between the lift configuration and when the flaps close the slot.

The upper aperture may be positioned downstream of the lower aperture. The slot may comprise substantially parallel forward and rear surfaces, defining a region therebetween for airflow in the lift configuration. The forward and rear surfaces of the slot may have a sinusoidal or sigmoid-like or shape. In other words, the forward surface of the slot may comprise a convex portion adjacent to the lower surface of the wing, and a concave portion adjacent to the upper surface of the wing. The rear surface of the slot may comprise a concave portion adjacent to the lower surface of the wing, and a convex portion adjacent to the upper surface of the wing. In this way, the shape of the slot may improve aerodynamic flow along the slot, which may in turn increase the lift coefficient of the wing in the lift configuration. The slot may taper in width from the lower surface to the upper surface of the wing. In this way, the slot may act as a nozzle to accelerate airflow passing through it, thereby allowing the wing to maintain lift at low airspeeds.

Behind a leading edge may mean that the slot is situated downstream of the leading edge. The leading edge of the wing may be referred to as a D-nose, and may comprise flight systems such as an anti-ice system. There may a part of an anti-ice system position forward of the slot, for example to warm the leading edge of the wing.

The upper and lower flaps abutting opposing surfaces of the slot in the lift configuration may mean that the upper and lower flaps lie adjacent to opposing surfaces of the slot. Alternatively or additionally, abut may mean a portion or a whole of the upper flap contacts one surface of the slot, and a portion or a whole of the lower flap contacts the opposing surface of the slot. In this way, in the lift configuration the flaps may form a substantially continuous aerodynamic surface with the slot.

Movement of the upper and lower flaps towards each other may comprise the upper and lower flaps pivoting towards each other. In other words, as the upper and lower flaps move towards each other, an end of each flap distal to the location of a pivot point may pivot into the interior of the slot and/or wing. In this way, the upper and lower flaps may be contained within the profile of the wing, thereby contributing minimal drag while permitting airflow along the slot.

There may be a plurality of upper and lower flaps arranged along the wing in a spanwise direction. Similarly, there may be a plurality of slots arranged along the wing in a spanwise direction, separated by portions of the wing without a slot. The degree of segmentation of the flaps and/or slots may be dependent on the flexibility, geometry and/or dihedral/anhedral angle of the wing.

The upper and lower flaps may be substantially thin, that is, the upper and lower flaps may have a high ratio of surface area to thickness. The thickness of the flap may be less than half, optionally less than 20%, of length of the flap (the dimension measured from one end - at the root of the flap at the hinge line/pivot point to the opposite end - at the tip of the flap). The upper flap, and also the lower flap, may have a thickness that is substantially the same across most, if not all, of its area. The thickness of the upper and lower flaps may vary optionally less than 30%, optionally less than 20%, optionally less than 10% and optionally less than 5% over 90% of the area of the flap.

The upper and lower flaps may have a length of 5% or less of the local chord of a wing comprising the control device. Alternatively, the upper and lower flaps may have a length of optionally 10% or less, optionally 7% or less, optionally 6% or less, optionally 4% or less and optionally 2% or less of the local chord of a wing comprising the control device.

It may be that the control device is operable in a dump configuration in which the upper flap extends above an upper surface of the wing to spoil airflow above the wing. In this way, the dump configuration may serve to create a controlled stall over the portion of the wing behind the upper flap, thereby reducing the lift coefficient of the wing. The dump configuration may serve to alleviate load on the portion of the wing comprising the control device.

The upper flap may extend above the upper surface of the wing by pivoting about a pivot point. In the dump configuration, the upper flap may be oriented substantially parallel to a normal of the upper surface of the wing. In other words, the upper flap may be deployed to be oriented transverse to (for example at a right angle to) the upper surface of the wing, which may maximise the deployed height of the upper flap and the degree of lift dumping. It may be that in the dump configuration, the upper flap is oriented at optionally 5° or less, optionally 10° or less or optionally 25° or less relative to a normal of the upper surface of the wing. The orientation of the upper flap in the dump configuration may be selected to modulate the degree of lift dumping. The maximum deployment height of the upper flap in the dump configuration may be optionally less than 10% of the local wing chord, optionally less than 8% of the local wing chord, optionally less than 5% of the local wing chord and optionally less than 3% of the local wing chord. In the dump configuration, airflow upstream of the upper flap may be substantially laminar, and airflow downstream of the upper flap may be substantially turbulent and/or detached from the upper surface of the wing.

It may be that in the dump configuration the lower flap is aligned with a lower surface of the wing. In this way, the lower flap may close an end of the slot at the lower surface of the wing, thereby preventing airflow from restricting or preventing fluid communication between the lower surface of the wing and the slot. In this way, the dump configuration may reduce lift due to the upper flap's extension above the upper surface of the wing, while minimising drag on the lower surface of the wing.

It may be that the control device further comprises a linkage connected to the upper and lower flaps, the linkage comprising a resilient member.

The linkage may be a connecting means for kinematically linking the upper and lower flaps. The linkage may comprise at least one connecting rod, arm, or shaft. The resilient member may be a mechanical spring, a gas spring and/or an elastomeric component. In this way, the resilient member may deform to distribute force to aid with operation of the control device. The linkage may have a size suitable for connecting the upper and lower flaps in various configurations.

It may be that in the dump configuration the linkage is arranged to compress the resilient member.

The resilient member may be located at an intersection of the linkage. For example, an upper connecting rod may be connected to an upper lever to move the upper flap about an upper pivot point, and a lower connecting rod may be connected to a lower lever to move the lower flap about a lower pivot point. The resilient member may be located at an actuator region between the upper and lower connecting rods. In the dump configuration, a distance between the upper and lower levers may be reduced to compress the resilient member. This compression may bias the flaps to maintain their positions in the dump configuration, and/or reduce the load on an actuator changing the operation of the control device.

It may be that in the dump configuration the linkage is arranged such that compression of the resilient member biases the lower flap to be aligned with the lower surface of the wing. In this way, the resilient member may apply a force to the lower flap via the linkage to maintain the lower flap's position in alignment with the lower surface of the wing. This may minimise drag on the lower surface of the wing in the dump configuration. When the lower flap is aligned with the lower surface of the wing, it may be prevented by rotating out of the body of the wing by a stop. The stop may be a P seal gasket, and/or a resilient member to seal the interface between the lower surface of the wing and the lower flap.

It may be that in the dump configuration the linkage is arranged such that compression of the resilient member biases the upper flap against oncoming airflow.

In the dump configuration, the upper flap may be pivoted upwards relative to the upper surface of the wing. In this way, the upper flap may be subject to significant forces from oncoming airflow, acting to pivot the upper flap downwards to align with the upper surface of the wing. A force applied to the upper flap via compression of the resilient member may act in an opposing direction to these forces, thereby enabling the upper flap to maintain its position in the dump configuration.

It may be that the upper flap is pivotably mounted adjacent to a rear surface of the slot and the lower flap is pivotably mounted adjacent to a forward surface of the slot. In this way, the pivotable motion of the upper and lower flaps may be configured to provide efficient aerodynamics during operation of the control device, while minimising load on an actuator arranged to operate the control device. This geometry may enable a linkage connected between the upper and lower flaps to move both flaps via a common actuator. This may reduce the complexity, size and/or weight of the control device.

It may be that in the lift configuration the upper flap abuts the rear surface of the slot and the lower flap abuts the forward surface of the slot. In this way, the upper and lower flaps may be arranged in the lift configuration to maximise airflow along the slot.

The flaps may be relatively small. For example, in comparison to the length of the slot (e.g. as measured as the straight line distance from the centre of the opening of the slot on the upper surface of the wing to the centre of the opening of the slot on the lower surface), the length of the flap (as stated above, the length of the flap being the dimension measured from one end - at the root of the flap at the hinge line/pivot point to the opposite end - at the tip of the flap) may be significantly less than half the slot length, may be less than a third of the slot length, preferably less than a quarter of the slot length and optionally less than 20% of the slot length. The length of the flap may be comparable to the thickness of the slot (e.g. as measured at an opening of the wing and/or as measured in a direction that is both orthogonal to the length of the slot and also to the width of the slot / the axis of pivoting of a flap - e.g. as measured in a chordwise direction on the wing). It may for example be the case that the flap is not much longer than the thickness of the slot opening that it needs to close over. The flap may have a length that is less than 150% the width of the slot. It may be that the flap has a length that is no more than 20% larger, preferably no more than 10% larger, and optionally no more than 5% larger, than the thickness of the slot opening that it needs to close over.

It may be that each of the upper and lower flaps is shorter than half the length of the fixed slot. In this way, the size of the flaps may be minimised. Due to the presence of the slot in the wing, the flaps may only need to be substantially the same length as the upper and lower ends of the slot. Short flaps may have a low mass, and may also have a lower surface area which may reduce aerodynamic forces on the flaps. Accordingly, the force required to move the flaps may be kept to a minimum, enabling a smaller and/or lower powered actuator to be used to move the flaps.

It may be that the control device is operable in a clean configuration in which the upper flap aligns with an upper surface of the wing and the lower flap aligns with a lower surface of the wing, to restrict airflow along the slot.

In the clean configuration, the upper and lower flaps may close upper and lower ends of the slot. This may ensure the upper and lower surfaces of the wing are aerodynamically smooth in the region of the slot, and enable the wing to function normally, for example in normal cruise.

It may be that the control device further comprises at least one actuator configured to move the upper and lower flaps and thereby change a configuration of the control device.

The at least one actuator may be connected directly to the upper and lower flaps. Alternatively or additionally, the at least one actuator may be connected indirectly to the upper and lower flaps, via upper and lower levers. The upper and lower levers may be coupled to the upper and lower flaps at the upper and lower pivot points respectively, thereby acting to increase the moment applied by the at least one actuator to move the upper and lower flaps. The at least one actuator may be connected to an upper connecting rod and/or a lower connecting rod. Distal ends of the upper and lower connecting rods may be connected to the upper and lower flaps via the upper and lower levers respectively. The upper connecting rod and lower connecting rod may be arranged with their proximal ends adjacent to one another near a centre of the wing. The proximal ends of the upper and lower connecting rods may comprise limiters, to prevent the ends moving past one another. The resilient member may be arranged between the two limiters. The actuator may be arranged to move one of the upper and lower connecting rods. In this way, movement of the upper or lower connecting rod may compress the resilient member between the limiters, consequently moving the other of the upper or lower connecting rod. Thus one actuator may be connected to one connecting rod to move both of the upper and lower flaps. This may reduce the weight and/or complexity of the control device.

The at least one actuator may be a single actuator connected to both of the upper and lower flaps. In this way, the size and complexity of the control device may be reduced, as a single actuator may be operable to move the upper and lower flaps. Alternatively, the control device may comprise a plurality of actuators. For example, the upper flap may be connected to an upper actuator and the lower flap may be connected to a lower actuator. This may allow for independent control of the upper and lower flaps, which may enable a high resolution of lift control.

The control device may be configured to move between configurations at a speed faster than the delay between gust detection ahead of the aircraft and a gust arriving at the wing. Accordingly, the control device may be configured to move between configurations in optionally less than 0.2s, optionally less than 0.1s, optionally less than 0.05s and optionally less than 0.01s. This high speed of operation of the control device may be achieved by using small and/or lightweight flaps, and/or one or more high-speed actuators.

The various configurations of the control device may correspond to different modes of operation. To summarise, there may be a cruise mode (or clean mode) in which the upper flap and lower flap close the slot; there may be a high lift mode in which the upper flap and lower flap open the slot to allow airflow therethrough; and there may be a lift dumping mode, in which at least one of the flaps moves into a position in which it spoils the airflow on the wing. It may be that a single actuator is provided which is configured to move the flaps between at least two and preferably all three of those modes of operation.

The resilient member may be configured to balance dynamic pressure on the upper and lower flaps in the three modes of operation. For example, the resilient member may be configured to balance about half (e.g. between 30 and 70%) of the maximum dynamic pressure on the upper flap in the dump configuration. Alternatively, the resilient member may be configured to balance optionally 70% or more, optionally 60% or more, optionally 40% or more and optionally 30% or more of the maximum dynamic pressure on the upper flap in the dump configuration. Where the resilient member is a spring, this may be achieved by selecting a spring of suitable dimensions and/or stiffness.

According to a second aspect of the present invention there is provided a wing assembly for an aircraft comprising a wing structure; a slot behind a leading edge of the wing structure; and a control device according to the first aspect.

According to a third aspect of the present invention there is provided a wing for an aircraft comprising a wing assembly according to the second aspect.

It may be that the wing comprises an inboard portion and an outboard portion, the outboard portion being foldable relative to the inboard portion, wherein the wing assembly is located in the foldable outboard portion

Due to the space constraints in the foldable outboard portion, the wing assembly comprising the control device may be compact enough to operate effectively in the foldable outboard portion.

According to a fourth aspect of the present invention there is provided a method of controlling lift exerted by a wing, the wing having upper and lower flaps pivotably mounted adjacent to a slot in the wing behind a leading edge, the method comprising a step of: operating the upper and lower flaps in a lift configuration by moving the upper and lower flaps towards each other to abut opposing surfaces of the slot, to permit airflow along the slot.

It may be that the method further comprises the step of: operating the upper and lower flaps in a dump configuration by moving the upper and lower flaps such that the upper flap extends above an upper surface of the wing to spoil airflow above the wing, and the lower flap is aligned with a lower surface of the wing.

It may be that the method further comprises the step of: operating the upper and lower flaps in a clean configuration by moving the upper and lower flaps such that the upper flap is aligned with the upper surface of the wing and the lower flap is aligned with the lower surface of the wing, to restrict airflow along the slot.

According to a fifth aspect of the present invention there is provided a wing assembly for an aircraft comprising: a wing structure; a slot behind a leading edge of the wing structure, the slot extending between top and bottom surfaces of the wing structure; and a control device comprising: a top flap pivotably mounted downstream of the slot and adjacent to the top surface of the wing structure; a bottom flap pivotably mounted upstream of the slot and adjacent to the bottom surface of the wing structure; wherein the control device is operable in a lift configuration to pivot the top and bottom flaps towards each other to align with opposing surfaces of the slot to permit airflow between the top and bottom surfaces of the wing structure via the slot.

According to a sixth aspect of the present invention there is provided a wing assembly for an aircraft comprising: a wing structure; a slot behind a leading edge of the wing structure; and a control device. The slot in the wing extends between an upper aperture on the top surface of the wing structure and a lower aperture on the bottom surface of the wing structure and defines an air-flow channel. The control device comprises an upper flap for closing the upper aperture, a bottom flap for closing the lower aperture, and at least one actuator (and preferably only one actuator mechanism) arranged to cause the upper flap and the bottom flap to operate selectively in each of a cruise mode, a high lift mode, and a lift dumping mode. In the cruise mode, the upper flap closes the upper aperture, the bottom flap closes the lower aperture, and air is prevented from flowing via the air-flow channel. In the high lift mode, the upper flap opens the upper aperture, the bottom flap opens the lower aperture, and air is permitted to flow via the air-flow channel. In the lift dumping mode, at least one of the upper flap and the bottom flap (preferably just the upper flap) moves into a position in which it spoils the airflow on the wing. The slot in the wing is preferably a fixed slot in the wing, such that the air-flow channel exists within the wing whether or not the flaps are open or shut. Thus, in embodiments, the shape and size of the air-flow channel is the same as between the cruise mode and the high lift mode, and preferably the same as between all modes of operation.

In one embodiment according to the sixth aspect of the present invention there is provided a wing assembly for an aircraft comprising:
a wing structure;
a slot behind a leading edge of the wing structure, the slot extending between an upper aperture on the top surface of the wing structure and a lower aperture on the bottom surface of the wing structure to define an air-flow channel; and
a control device comprising:
   an upper flap for closing the upper aperture,
   a bottom flap for closing the lower aperture,
   and an actuator (preferably the same single actuator in each case) arranged to cause the upper flap and the bottom flap to operate selectively in each of the following modes:
      i.) a cruise mode in which the upper flap closes the upper aperture, the bottom flap closes the lower aperture, and air is prevented from flowing via the air-flow channel,
      ii.) a high lift mode in which the upper flap opens the upper aperture, the bottom flap opens the lower aperture, and air is permitted to flow via the air-flow channel, and
      iii.) a lift dumping mode, in which at least one of the upper flap and the bottom flap moves into a position in which it spoils the airflow on the wing,
wherein the shape and size of the air-flow channel is the same as between the cruise mode and the high lift mode.

The aircraft is preferably a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft. For the purposes of the present specification the term commercial passenger aircraft also covers aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
- Figure 1: shows a side view of a control device in a clean configuration, according to a first embodiment of the invention;
- Figure 2: shows the control device of Figure 1 in a lift configuration;
- Figure 3: shows the control device of Figures 1 and 2 in a dump configuration;
- Figure 4: shows an aircraft incorporating the control device of Figures 1 to 3; and
- Figure 5: shows a flow diagram of steps of operating the aircraft of Figure 4 in accordance with a further embodiment.

### DETAILED DESCRIPTION

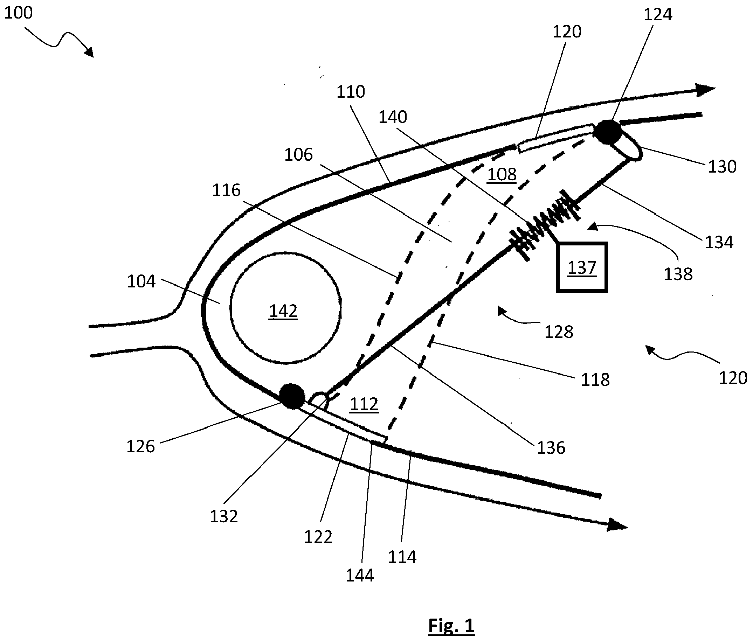

An example of a control device in accordance with an embodiment of the present invention will now be described by way of example only with reference to Figs. 1 to 3.

Figure 1 shows a side view of a cross-section of a leading edge of an aircraft wing 100. The rest of the aircraft wing 100 is not shown for clarity. The wing 100 comprises a control device 102, which is shown in a clean configuration, which directs oncoming airflow to flow around the wing 100 in a manner suitable for efficient cruise. The passage of airflow is shown by arrows extending from a point forward of the leading edge of the wing 100 and over an upper surface 110 and lower surface 114 of the wing 100. A D-nose 104 on the leftmost side of the is situated at the extremity of the leading edge of the aircraft wing 100. The D-nose 104 is therefore the first part of the wing 100 which airflow contacts during flight.

As viewed in cross-section, separating the D-nose 104 from the body of the wing 100 is a slot 106, which extends between an upper end 108 terminating at the upper surface 110 of the wing and a lower end 112 terminating at the lower surface 114 of the wing 100. The slot 106 has a forward surface 116 bordering the D-nose 104, and a rear surface 118 bordering the body of the wing 100. The forward 116 and rear 118 surfaces of the slot 106 are substantially parallel to one another and are shown with a slight sinusoidal / sigmoidal shape. That is to say, the forward 116 and rear 118 surfaces of the slot 106 curve towards the leading edge of the wing 100 adjacent to the lower surface 114 of the wing 100, and the forward 116 and rear 118 surfaces of the slot 106 curve towards the body of the wing 100 adjacent to the upper surface 110 of the wing 100.

Upper 120 and lower 122 flaps are situated at the upper 108 and lower 110 ends of the slot 106, and extend across the upper 108 and lower 112 ends to isolate the slot 106 from the surrounding airflow. In this way, airflow is restricted or entirely prevented from moving from the lower surface 114 to the upper surface 110 of the wing 100 via the slot 106. The upper 120 and lower 122 flaps are substantially planar, and follow the curvature of the upper 110 and lower 114 surfaces of the wing 100 respectively. Therefore, in the clean configuration, the upper 120 and lower 122 flaps form a continuation of the upper 110 and lower 114 surfaces of the wing 100 respectively.

The upper flap 120 is pivotably attached to the wing 100 via an upper pivot point 124 located adjacent to the intersection between the rear surface 118 of the of the slot 106 and the upper surface 110 of the wing 100. The lower flap 122 is pivotably attached to the wing 100 via a lower pivot point 126 located adjacent to the intersection between the forward surface 116 of the slot 106 and the lower surface 114 of the wing 100.

Since the width of the slot 106 is substantially shorter than the thickness of the wing 100, and each of the upper 120 and lower 122 flaps is proportioned to cover the width of the slot 106, each of the upper 120 and lower 122 flaps is substantially shorter than 50% of the thickness of the wing 100 in the region of the slot 106.

Connected between the upper 120 and lower 122 flaps is a mechanical linkage 128. The mechanical linkage 128 comprises upper 130 and lower 132 levers rigidly attached to the upper 124 and lower 126 pivot points. The upper 130 and lower 132 levers are shown as rounded oblongs to visually differentiate them from the upper 120 and lower 122 flaps. The upper lever 130 is pivotably attached to an upper connecting rod 134, which extends from the upper lever 130 towards the interior of the wing 100. The lower lever 132 is pivotably attached to a lower connecting rod 136, which extends from the lower lever 132 towards the interior of the wing 100.

The upper 134 and lower 136 connecting rods are substantially parallel to one another, and are coupled at an actuator region 138, which is shown as an overlapping portion of the upper 134 and lower 136 connecting rods bounded by truncated lines oriented perpendicularly to the upper 134 and lower 136 connecting rods. An actuator 137 is shown as a square adjacent to the actuator region 138, to show that mechanical actuation applied in the actuator region 138 will move the upper 134 and lower 136 connecting rods, thereby pivoting the upper 134 and lower 136 levers which in turn will pivot the upper 120 and lower 122 flaps about the upper 124 and lower 126 pivot points respectively.

Situated at the actuator region 138 is a spring 140, which is shown as a triangular waveform. The spring 140 is compressed in the clean configuration, and thereby contributes to a preload applied to the upper 120 and/or lower 122 flaps to retain their positions in line with the upper 110 and lower 114 surfaces of the wing, against the forces exerted by oncoming airflow. In this way, the smooth aerodynamic surfaces of the upper 110 and lower 114 surfaces of the wing are maintained.

An anti-ice system 142 is located in the D-nose 104 at the leading edge of the wing 100, and is shown as a circle. Due to its compactness, the control device 102 described above does not impinge upon the anti-ice system 142, thereby permitting the two systems to be incorporated into the wing 100 adjacent to one another.

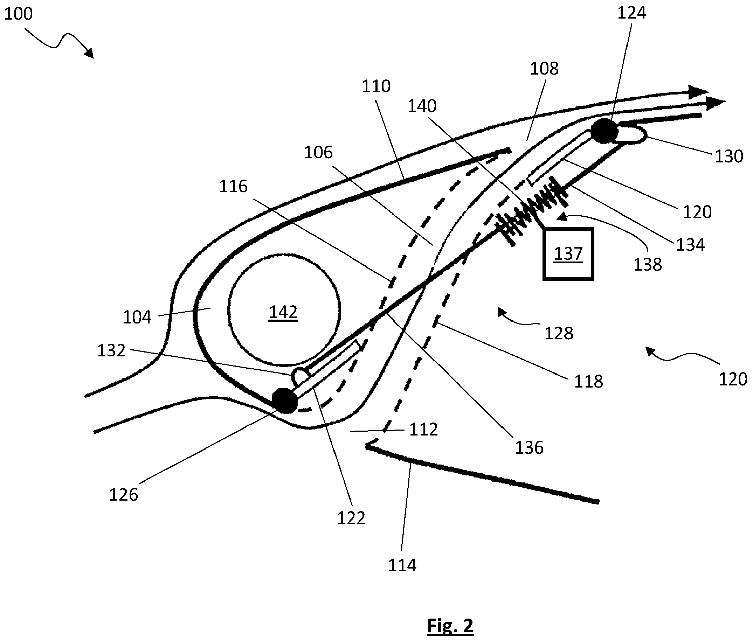

Figure 2 shows the control device 102 of Figure 1 in a lift configuration. The arrangement of the upper 120 and lower 122 flaps and the mechanical linkage 128 will be described relative to their arrangement in the previously described clean configuration.

Via mechanical actuation, the upper connecting rod 134 has been displaced upward towards the upper surface of the wing 100. Due to its connection to lower connecting rod 136, the lower connecting rod 136 is also displaced upward towards the upper surface of the wing 100. The lower lever 132 has thereby rotated anti-clockwise to account for the upwards displacement, which in turn has caused the lower flap 122 to rotate approximately 60° anti-clockwise about the lower pivot point 126. The lower flap 122 now abuts the forward surface of the slot 106; that is to say, at least a portion of the lower flap 122 is substantially adjacent to the forward surface 116 of the slot 106. The lower end of the slot 106 is no longer terminated by the lower flap 122, and is in fluid communication with the airflow at the lower surface 114 of the wing 100.

Due to the upward displacement of the upper connecting rod 134, the upper lever 134 has thereby rotated anti-clockwise. This in turn has caused the upper flap 120 to rotate approximately 60° anti-clockwise about the upper pivot point 124. The upper flap 120 now abuts the rear surface 118 of the slot 106; that is to say, at least a portion of the upper flap 120 is substantially adjacent to the rear surface 118 of the slot. The upper end 108 of the slot 106 is no longer terminated by the upper flap 120, and is in fluid communication with the airflow at the upper surface 110 of the wing 100.

While the upper 134 and lower 136 connecting rods have been displaced upward, they have not substantially moved relative to one another. Therefore, the spring 140 is compressed to substantially the same degree as in the clean configuration, thereby contributing to a minimal preload applied to the upper 120 and/or lower 122 flaps to retain their positions in line with the rear 118 and forward 116 surfaces of the slot 106.

In the lift configuration, the open slot 106 permits fluid communication between the lower 114 and upper 110 surfaces of the wing 100. Aerodynamic flow of air is permitted to pass under the D-nose 104 and up through the slot 106 to the upper surface 110 of the wing 100, as shown by an arrow. Therefore, the lift configuration may increase the wing 100 stall angle of attack, enabling the wing 100 to perform safely at lower speeds, and/or enable an aircraft comprising the wing 100 to take off and land in shorter distances. In other words, the lift coefficient of the wing 100 may be increased in the lift configuration.

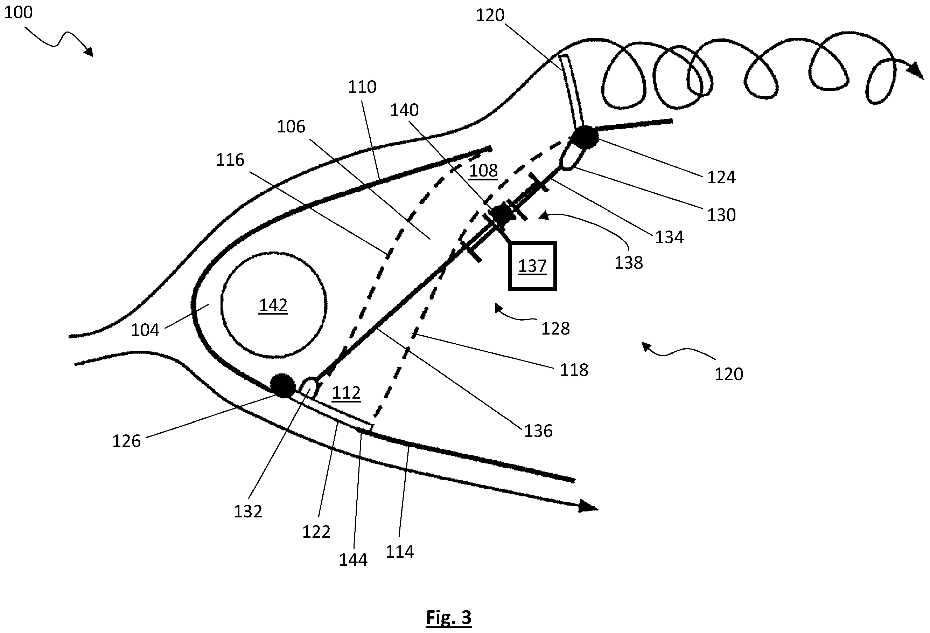

Figure 3 shows the control device 102 of Figures 1 and 2 in a dump configuration. Again, the arrangement of the upper 120 and lower 122 flaps and the mechanical linkage 128 will be described relative to their arrangement in the clean configuration.

Via mechanical actuation, the upper connecting rod 134 has been displaced downwards relative to the lower connecting rod 136. This has rotated the upper lever 130 clockwise, which in turn has caused the upper flap 120 to rotate approximately 90° clockwise about the upper pivot point 124. The upper flap 120 now acts as a spoiler; that is to say, the upper flap 120 extends above the upper surface 110 of the wing 100 to disrupt laminar flow, thereby providing a controlled stall over a portion of the upper surface 110 of the wing 100 behind the upper flap 120. This is shown by an arrow looping behind the upper flap 120, to indicate turbulent flow.

The lower flap 122 is prevented from any clockwise rotation out of the body of the wing 100 by its contact with a stop 144 located adjacent to the intersection between the rear surface 118 of the slot 106 and the lower surface 114 of the wing 100. This is turn prevents any downwards movement of the lower connecting rod 136.

The upper connecting rod 134 moving downwards relative to the lower connecting rod 136 compresses the spring 140, which is shown by a compression of the triangular waveform. Therefore, the spring 140 is substantially more compressed in the dump configuration than either the clean configuration or the lift configuration. In this way, there is a substantially greater preload applied to the upper 120 and/or lower 122 flaps to retain their positions.

The upper flap 120 is biased against oncoming airflow to remain substantially perpendicular to the upper surface 110 of the wing 100, and the lower flap 122 is biased against the stop 144 to ensure that the lower end of the slot 106 remains closed. This preload applied to the upper 120 and lower 122 flaps by the spring 140 may reduce the load required by the actuator 137 to move the upper 120 and lower 122 flaps between the different configurations.

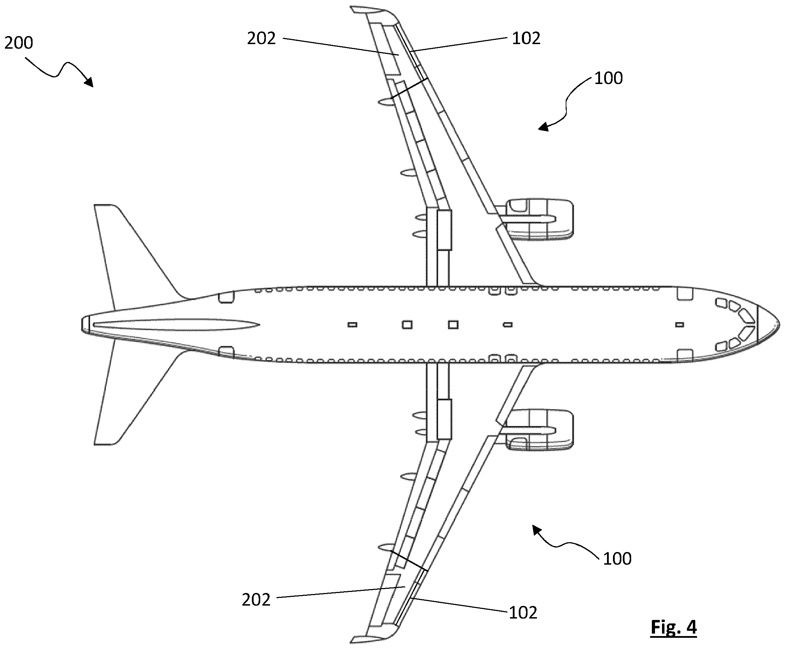

Figure 4 shown an aircraft 200 having two wings 100 with folding wing-tips 202. Thus, each wing 100 has an inboard portion and an outboard portion, the outboard portion being foldable relative to the inboard portion. Each foldable outboard portion includes a control device 102 as described above in relation to Figures 1 to 3.

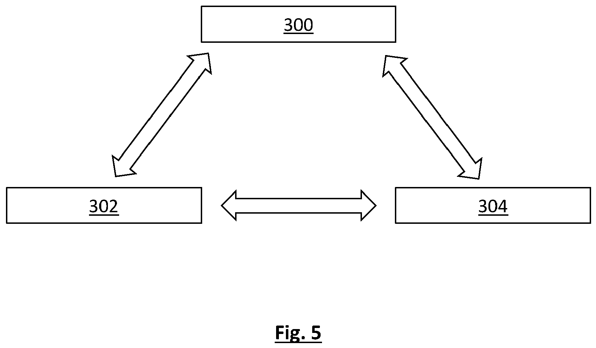

Figure 5 is a schematic diagram showing the steps of operating an aircraft 200 of Figure 4. Thus there is a step 300 of operating the upper 120 and lower 122 flaps in the high lift configuration by the actuator 137 moving the upper 120 and lower 122 flaps towards each other to abut opposing surfaces of the slot 106, to permit airflow along the slot 106. There is a step 302 of operating the upper 120 and lower 122 flaps in a lift dumping configuration (for example when a gust is detected) by the actuator 137 moving the upper 120 and lower 122 flaps such that the upper flap 120 extends above an upper surface 110 of the wing 100 to spoil airflow above the wing 100, and the lower flap 122 is aligned with a lower surface 114 of the wing 100. There is a step 304 of operating the wing 100 in a clean configuration (e.g. cruise mode) by moving the upper 120 and lower 122 flaps such that the upper flap 120 is aligned with the upper surface 110 of the wing 100 and the lower flap 122 is aligned with the lower surface 114 of the wing 100. In this configuration there is no airflow along the slot 106 channel. The same single actuator performs all such steps 300, 302, 304. Double-ended arrows between the steps 300, 302, 304 indicate that the steps may be performed in any order, depending on the requirements of the aircraft.

Whilst the present invention has been described and illustrated with reference to particular embodiments, it will be appreciated by those of ordinary skill in the art that the invention lends itself to many different variations not specifically illustrated herein.

In some embodiments, the upper and lower flaps may be arranged to move with different kinematics, e.g. something different from pivoting motion about a fixed axis. For example, at least one of the flaps may be arranged to move, at least in part, via translational movement. Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A control device for an aircraft, the control device comprising upper and lower flaps pivotably mountable adjacent to a slot in a wing behind a leading edge; wherein the control device is operable in a lift configuration to move the upper and lower flaps towards each other to abut opposing surfaces of the slot, to permit airflow along the slot.

2. A control device according to claim 1, wherein the control device is operable in a dump configuration in which the upper flap extends above an upper surface of the wing to spoil airflow above the wing.

3. A control device according to claim 2, wherein in the dump configuration the lower flap is aligned with a lower surface of the wing.

4. A control device according to claim 2 or claim 3, further comprising a linkage connected to the upper and lower flaps, the linkage comprising a resilient member.

5. A control device according to claim 4, wherein in the dump configuration the linkage is arranged to compress the resilient member.

6. A control device according to claim 5, wherein in the dump configuration the linkage is arranged such that compression of the resilient member biases the lower flap to be aligned with the lower surface of the wing.

7. A control device according to claim 5 or claim 6, wherein in the dump configuration the linkage is arranged such that compression of the resilient member biases the upper flap against oncoming airflow.

8. A control device according to any preceding claim, wherein the upper flap is pivotably mounted adjacent to a rear surface of the slot and the lower flap is pivotably mounted adjacent to a forward surface of the slot, and optionally wherein in the lift configuration the upper flap abuts the rear surface of the slot and the lower flap abuts the forward surface of the slot.

9. A control device according to any preceding claim, wherein each of the upper and lower flaps is shorter than half the length of the fixed slot, and optionally wherein the control device is operable in a clean configuration in which the upper flap aligns with an upper surface of the wing and the lower flap aligns with a lower surface of the wing, to restrict airflow along the slot, the control device optionally further comprising at least one actuator configured to move the upper and lower flaps and thereby change a configuration of the control device.

10. A wing assembly for an aircraft comprising a wing structure; a slot behind a leading edge of the wing structure; and a control device according to any of claims 1 to 9.

11. A wing for an aircraft comprising a wing assembly according to claim 10.

12. A wing according to claim 11, comprising an inboard portion and an outboard portion, the outboard portion being foldable relative to the inboard portion, wherein the wing assembly is located in the foldable outboard portion.

13. A method of controlling lift exerted by a wing, the wing having upper and lower flaps pivotably mounted adjacent to a slot in the wing behind a leading edge, the method comprising a step of:
operating the upper and lower flaps in a lift configuration by moving the upper and lower flaps towards each other to abut opposing surfaces of the slot, to permit airflow along the slot.

14. A method of controlling lift exerted by a wing according to claim 13, further comprising a step of:
operating the upper and lower flaps in a dump configuration by moving the upper and lower flaps such that the upper flap extends above an upper surface of the wing to spoil airflow above the wing, and the lower flap is aligned with a lower surface of the wing;
and optionally further comprising a step of:
operating the upper and lower flaps in a clean configuration by moving the upper and lower flaps such that the upper flap is aligned with the upper surface of the wing and the lower flap is aligned with the lower surface of the wing, to restrict airflow along the slot.

15. A wing assembly for an aircraft comprising:
a wing structure;
a slot behind a leading edge of the wing structure, the slot extending between top and bottom surfaces of the wing structure; and
a control device comprising:
a top flap pivotably mounted downstream of the slot and adjacent to the top surface of the wing structure;
a bottom flap pivotably mounted upstream of the slot and adjacent to the bottom surface of the wing structure;
wherein the control device is operable in a lift configuration to pivot the top and bottom flaps towards each other to align with opposing surfaces of the slot to permit airflow between the top and bottom surfaces of the wing structure via the slot.
